# EUROPEAN PATENT APPLICATION

(11) **EP 3 954 859 A1**
(43) Date of publication of application: **16.02.2022**
(21) Application number: 20786911.6
(22) Date of filing: 10.04.2020
(51) Int. Cl.: E06B 9/326, E06B 9/42, F16G 13/12

(54) **BALL CHAIN AND SHADE DEVICE**

(30) Priority: 12.04.2019 JP 2019076647; 25.10.2019 JP 2019194360
(71) Applicant: Tachikawa Corporation, Tokyo 108-8334 (JP)
(72) Inventor: YAMAGISHI, Kazuto, Tokyo 108-8334 (JP); NAKAMURA, Hajime, Tokyo 108-8334 (JP); TANAKA, Ryosuke, Tokyo 108-8334 (JP); ASAKA, Tsubasa, Tokyo 108-8334 (JP)
(74) Representative: Gulde & Partner
(86) International application number: PCT/JP2020/016088
(87) International publication number: WO 2020/209355

(57) **Abstract**

The present invention provides a ball chain that makes it possible to provide a fail-safe function to metal ball chains. Provided is a ball chain in which metal balls 16a are linked by a metal link shaft 16b, wherein a first end portion 17 and a second end portion 18 are coupled by a coupling part 21. The coupling part 21 comprises a first metal connector 22a provided with a first fitting protrusion 28a, a second metal connector 22b provided with a second fitting protrusion 28b, and a coupling member 23 for coupling the first metal connector 22a and the second metal connector 22b. A resin core member 31 of the coupling member 23 has a first fitting recess into which the first fitting protrusion 28a is fit and a second fitting recess 32b into which the second fitting protrusion 28b is fit. When a pulling force is applied that exceeds the pulling force during normal operation, at least the fitting protrusion 28a, 28b is dislodged from the fitting recess due to the elasticity of the resin in the resin core member 31.

## Description

### Technical Field

The present invention relates to a ball chain and a shade device provided therewith, in which the first end of the chain is connected to the second end by a joint.

### Background Art

Ball chains are used as operating cord in the lifting and lowering devices of slats in horizontal blinds and screens in roll screens. For example, Patent Literature 1 describes a ball chain in which resin balls are formed at equal intervals on a resin cord. The operating cord has a fail-safe function to cut when a pulling force exceeding the pulling force of normal operation is applied.

### Citation List

### Patent Literature

Patent Literature 1: Japanese Patent No. 5613387

### Summary of Invention

### Technical Problem

Some ball chains used as operating cords are made of metal instead of resin. Metal ball chains are often composed of a plurality of metal balls connected by metal link shafts. However, the configuration of a metal ball chain is different from that of a resin ball chain. Also, in the case of metal, it is difficult to form a finer uneven shape, unlike in the case of resin. Therefore, it is difficult to directly apply the fail-safe function of the resin ball chain of Patent Document 1 to the metal ball chain.

The present invention has been made to solve the above problems. An object of the present invention is to provide a ball chain and a shade device capable of providing a fail-safe function even for metal ball chains.

### Solution to Problem

The ball chain for solving the above problem is the ball chain in which a plurality of metal balls are connected by metal link shafts and the first and second end thereof are connected at a joint, wherein:
the joint is disconnected at least at the first end or at the second end when a pulling force exceeding the pulling force of normal operation is applied to the ball chain.

In the ball chain, the joint may comprise a first metal connector constituting the first end and having a first fitting protrusion, a second metal connector constituting the second end and having a second fitting protrusion, and a connecting member connecting the first and second metal connector and having a resin core and a metal cover covering the resin core; the resin core has a first fitting recess into which the first fitting protrusion is fitted and a second fitting recess into which the second fitting protrusion is fitted; and due to the elasticity of the resin core, at least the first fitting protrusion to be disconnected from the first fitting recess or the second fitting protrusion to be disconnected from the second fitting recess when a pulling force exceeding the pulling force of normal operation is applied to the ball chain.

In the ball chain, the first fitting protrusion may be provided with a first diameter-expanding portion; the second fitting protrusion is provided with a second diameter-expanding portion;
the first fitting recess is provided with a first hook portion to which the first diameter-expanding portion is hooked; and the second fitting recess is provided with a second hook portion to which the second diameter-expanding portion is hooked.

In the ball chain, the joint may comprise: a first connector made of metal, constituting the first end and having a fitting protrusion, and a second connector constituting the second end and is connected to the first connector; the second connector has a resin core and a metal cover that covers the resin core; the resin core has a fitting recess into which the fitting protrusion is fitted; and due to the elasticity of the resin core, the fitting protrusion to be disconnected from the fitting recess when a pulling force exceeding the pulling force of normal operation is applied to the ball chain.

In the ball chain, the joint may comprise a first metal holder holding the first end and having a first fitting protrusion, a second metal holder holding the second end and having a second fitting protrusion, and a connecting member connecting the first and second metal holder; the connecting member has a first fitting recess into which the first fitting protrusion is fitted and a second fitting recess into which the second fitting protrusion is fitted; and at least the first fitting protrusion is disconnected from the first fitting recess, or the second fitting protrusion is disconnected from the second fitting recess when a pulling force exceeding the pulling force of normal operation is applied to the ball chain.

In the ball chain, the joint may comprise a link shaft member having an elastic piece, wherein: the elastic piece is placed in the metal ball constituting the first end and provided with an engagement portion at the tip; the engagement portion is inserted into a through hole of the metal ball constituting the second end; and due to the elasticity of the elastic piece, the engagement portion is removed from the through hole when a pulling force exceeding the pulling force of normal operation is applied to the ball chain.

In the ball chain, the joint may further comprise a displacement member inserted with the pair of elastic pieces and displaced by its own weight; and the displacement member is configured to reduce the amount of displacement of the elastic pieces in the direction in which the engagement portions are removed from the through hole when displaced in the direction approaching the engagement portions and configured to increase the amount of displacement of the elastic pieces in the direction in which the engagement portions are removed from the through hole when displaced in the direction away from the engagement portions.

In the ball chain, the joint may comprise a metal link ball to which a first metal link shaft extending from the first end and a second metal link shaft extending from the second end are hooked; the first metal link shaft has a first flange at the end and the second metal link shaft has a second flange at the end; the metal link ball has a first through hole to which the first flange is engaged, a second through hole to which the second flange is engaged, a split line that opens the metal link ball, and a third through hole located between the first through hole and the second through hole and on the split line; and the metal link ball temporarily opens from the split line, allowing at least the first flange to be removed from the first through hole or the second flange to be removed from the second through hole when a pulling force exceeding the pulling force of normal operation is applied to the ball chain.

In the ball chain, the joint may comprise a metal link ball to which a first metal link shaft extending from the first end and a second metal link shaft extending from the second end are hooked; the metal link ball has a resin core and a metal cover that covers the resin core; the resin core has a space inside that is connected to the insertion hole where the flange of the first metal link shaft and the insertion hole where the flange of the second metal link shaft can be press-fitted; the metal cover has a through hole connecting the insertion hole to the outside and through which the flange can be inserted; and the flange is removed from the space when a pulling force exceeding the pulling force of normal operation is applied to the ball chain.

The shade device for solving the above problem is the shade device in which an endless ball chain is hung on a pully and a shade material is opened and closed by operation of the ball chain, wherein: the ball chain is configured such that a plurality of metal balls are connected by metal link shafts and that the first and second ends thereof are connected at joints; one joint is located at one side of the ball chain with respect to the pulley and other joint is located at the other side of the ball chain with respect to the pulley; and the joints have a different ease of disconnection from the ends when they are located at the one side than when they are located at the other side.

In the shade device, the joint located at the one side may disconnect when a pulling force exceeding the pulling force of normal operation of opening the shade material is applied; and the joint located at the other side may disconnect when a pulling force exceeding the pulling force of normal operation of closing the shade material is applied.

In the shade device, at the one side, the shade material is in one of the operating states of closing and opening when continuously operated, and at the other side, the shade material is in the other of the operating states of closing and opening when temporarily operated; the joint at the one side disconnects when a pulling force exceeding the pulling force of normal operation at the one side is operated; and the joint at the other side disconnects when a pulling force lower than the pulling force of the normal operation is operated.

In the shade device, the joints may comprise a link shaft member having a pair of elastic pieces, and a displacement member; the pair of elastic pieces are placed in the metal ball constituting the first end and provided with an engagement portion at the tip; the engagement portions are inserted into a through hole of the metal ball constituting the second end; the displacement member is inserted with the pair of elastic pieces and displaced by its own weight; and the displacement member is configured to displace in the direction away from the engagement portions and increase the amount of displacement of the elastic pieces in the direction in which the engagement portions are removed from the through hole when the joints are placed at the one side, and configured to displace in the direction approaching the engagement portions and reduce the amount of displacement of the elastic pieces in the direction in which the engagement portions are removed from the through hole when the joints are placed at the other side.

### Advantageous Effects of Invention

According to this invention, a fail-safe function can be provided for metal ball chains.

### Brief Description of Drawings

FIG. 1 is a front view of a horizontal blind in the first embodiment.
FIG. 2A is a front view of a main part of a ball chain in the first embodiment, FIG. 2B is an enlarged cross-sectional view of a main part of the ball chain, and FIG. 2C is an enlarged front view of a joint.
FIG. 3 is an exploded view of the joint that connects a first end and a second end of the ball chain in the first embodiment.
FIG. 4A is a front view of a first and second metal connectors in the first embodiment, FIG. 4B is a side view thereof, and FIG. 4C is a plan view thereof.
FIG. 5A is a plan view of a resin core that constitutes a connecting member in the first embodiment, and FIG. 5B is a bottom view thereof.
FIG. 6A is an exploded view of a joint connecting a first and second ends of the ball chain in the second embodiment, and Fig. 6B is a perspective view of the second end viewed from the opposite side.
FIG. 7 is a side view of a ball chain in the third embodiment.
FIG. 8A is a side view of a ball chain in the fourth embodiment, showing a link shaft member connecting metal balls adjacent to each other, Fig. 8B is the side view thereof, showing the metal balls passing through a through hole, and Fig. 8C is the side view thereof, showing a state in which an engagement portion of the link shaft member is removed from the through hole.
FIG. 9A is a side view of the ball chain in the fifth embodiment, in which a displacement member is displaced to a base end of elastic pieces, FIG. 9B is the side view thereof, in which the displacement member is passing through a through hole of a ball portion, FIG. 9C is the side view thereof, in which an engaging portion of a link shaft member is disengaged from the through hole, and FIG. 9D is the side view thereof, in which the displacement member is displaced to an engagement portion.
FIG. 10 is a side view of a horizontal blind.
FIG. 11 is a perspective view of a metal link ball in the sixth embodiment.
FIG. 12A is a side view of the metal link ball in the sixth embodiment, showing two link shafts connected to the metal link ball, FIG. 12B is a side view thereof, showing one of the link shafts being pulled, FIG. 12C is a side view thereof, showing the link shaft pulled out.
FIG. 13A is a side view of a metal link ball in the seventh embodiment, showing metal balls connected, and FIG. 13B is a side view thereof, showing a link shaft pulled out.
FIG. 14 is a front view of the relationship between the connector and the link shaft in the eighth embodiment.

### Description of Embodiments

Hereinafter, a horizontal blind using a ball chain applied the present invention as the operating cord will be described with reference to the drawings.

### [First Embodiment]

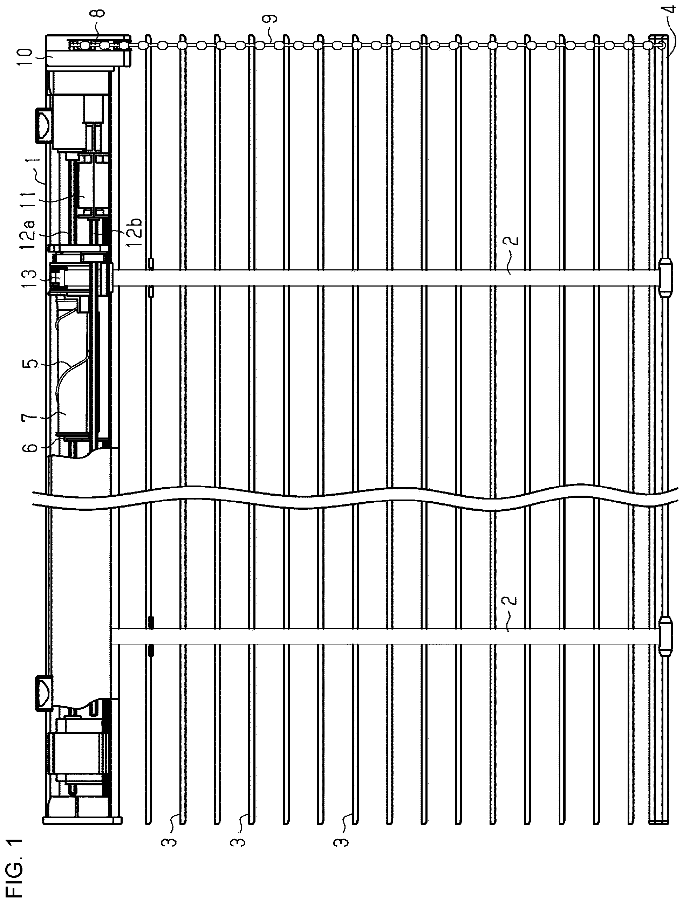

As shown in Fig. 1, in a horizontal blind, a number of slats 3 are supported on ladder tapes 2 suspended from a head box 1 in which a lifting/lowering device of a bottom rail and slats are installed, and the bottom rail 4 is attached to the lower end of the ladder tapes 2.

Lifting cords 5 are inserted in the slats 3 near the support position of the ladder tapes 2, and a bottom rail 4 is suspended and supported at the lower end of the lifting cords 5. The upper end of the lifting cords 5 are wound around a winding shaft 7 that is rotatably supported by support members 6 located in the head box 1.

At one end of the head box 1, a pulley 8 is rotatably supported, and an endless ball chain 9 is hung on the pulley 8. When the ball chain 9 is operated to rotate the pulley 8 in the forward and reverse directions, the winding shaft 7 is rotated via a gear box 10 and the lifting shaft 12a, etc., and the lifting cords 5 are wound up or unwound on the winding shaft 7 to lift and lower the slats 3 and bottom rail 4.

When the pulley 8 is rotated, the tilt drum 13 is rotated via the gear box 10, a tilt unit 11, a tilt shaft 12b, etc., and each slat 3 is rotated via the ladder tapes 2.

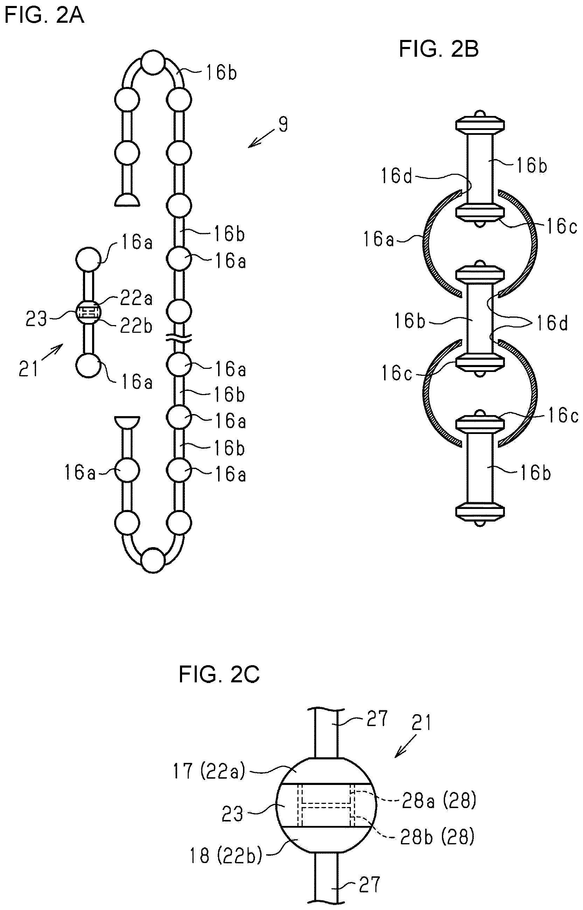

Next, the specific configuration of the ball chain 9 will be explained. As shown in Fig. 2A, the ball chain 9 is an operating cord for horizontal blinds and is a metal ball chain. The ball chain 9 comprises a large number of metal balls 16a (hereinafter simply referred to as balls 16a) and metal link shafts 16b (hereinafter simply referred to as link shaft 16b) that connects adjacent balls 16a to each other. The ball 16a is formed into a sphere by caulking a metal plate such as stainless steel, and a through hole 16d is formed by butting recesses on two relative tops of the metal plate together. The ball diameter of the ball 16a is, for example, a few millimeters, preferably 4.5 mm. As shown in Fig. 2B, the link shaft 16b is a straight member and has flanges 16c at each end. The link shaft 16b is engaged in the recess of the ball 16a in the expanded state, and then the ball 16a is caulked to form a spherical shape. This places the flange 16c inside the ball 16a and prevents the link shaft 16b from releasing the ball 16a. The adjacent balls 16a are connected by the link shaft 16b to form a single ball chain 9. As shown in Fig. 2C, the two ends of one ball chain 9 before it becomes annular, i.e., a first end 17 and a second end 18, are connected by a joint 21 to form an endless chain.

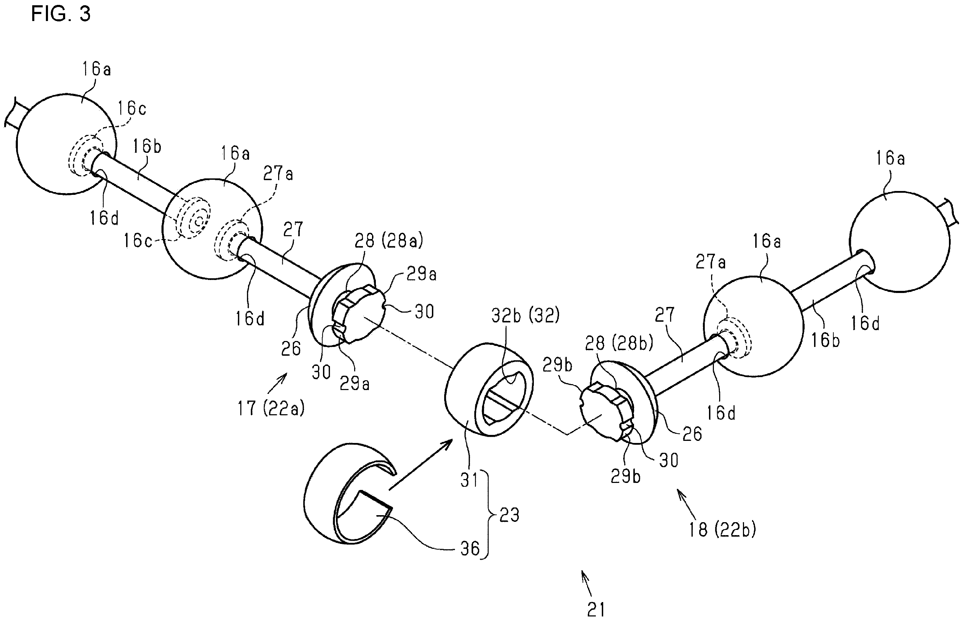

As shown in Fig. 3, the joint 21 comprises a first metal connector 22a (hereinafter simply referred to as "first connector 22a") constituting the first end 17, a second metal connector 22b (hereinafter simply referred to as "second connector 22b") constituting the second end 18, and a connecting member 23 that connects the firsts connector 22a and the second connector 22b. Since the first connector 22a and the second connector 22b have the same configuration, they are collectively referred to as a metal connector 22 (also referred to simply as a connector 22).

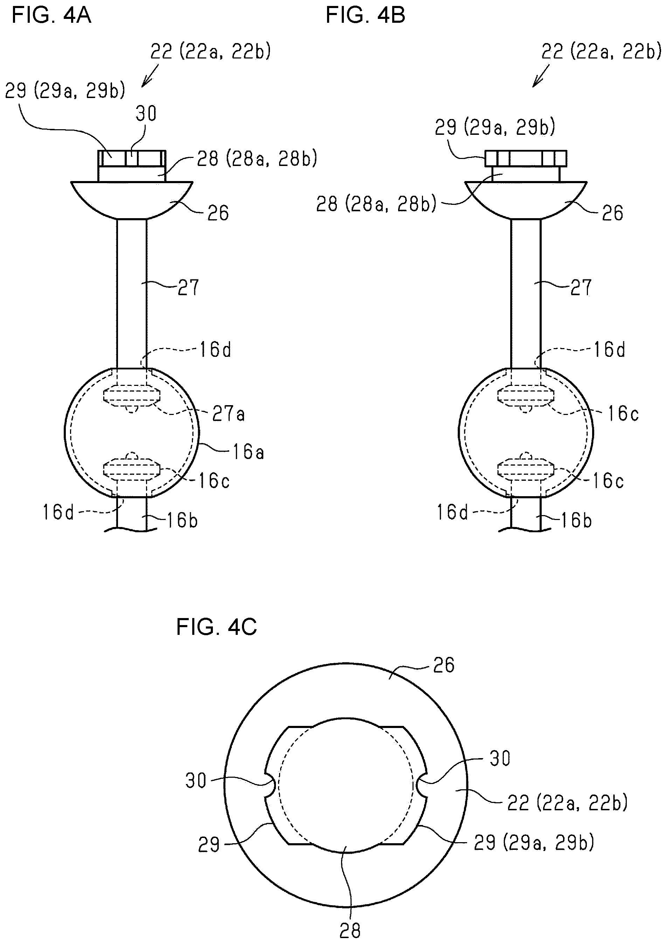

As shown in Figs. 4a, 4b, and 4c, the connector 22 is a metal molded body and has a missing sphere portion 26 having a shape of a sphere cut off in one plane, a link shaft portion 27 derived from the peak of the missing sphere portion 26, and a fitting protrusion 28 configured on the bottom surface opposite to the link shaft portion 27. The fitting protrusion 28 of the first connector 22a is referred to as the first fitting protrusion 28a, and the fitting protrusion of the second connector 22b is also referred to as the second fitting protrusion 28b.

The missing sphere portion 26 has a shape that is cut off at about 1/3 of the sphere. The base of the link shaft portion 27 is located at the peak of the missing sphere portion 26, and the tip of the link shaft portion 27 is provided with a retaining portion 27a. The link shaft portion 27 fits into the through hole 16d of the adjacent ball 16a and engages with the ball 16a.

The fitting protrusion 28 is formed in the shape of a round shaft protruding from the flat bottom surface of the missing sphere portion 26. On the outer circumferential surface of the tip of the fitting protrusion 28, diameter-expanding portions 29 are formed diametrically in a linear symmetry to the center of the round shaft, and a concave 30 in a semicircular cross section is formed in the middle of each diameter-expanding portion 29. The diameter-expanding portions 29 on the first connector 22a side are also referred to as the first diameter-expanding portions 29a, and the diameter-expanding portions 29 on the second connector 22b side are also referred to as the second diameter-expanding portions 29b.

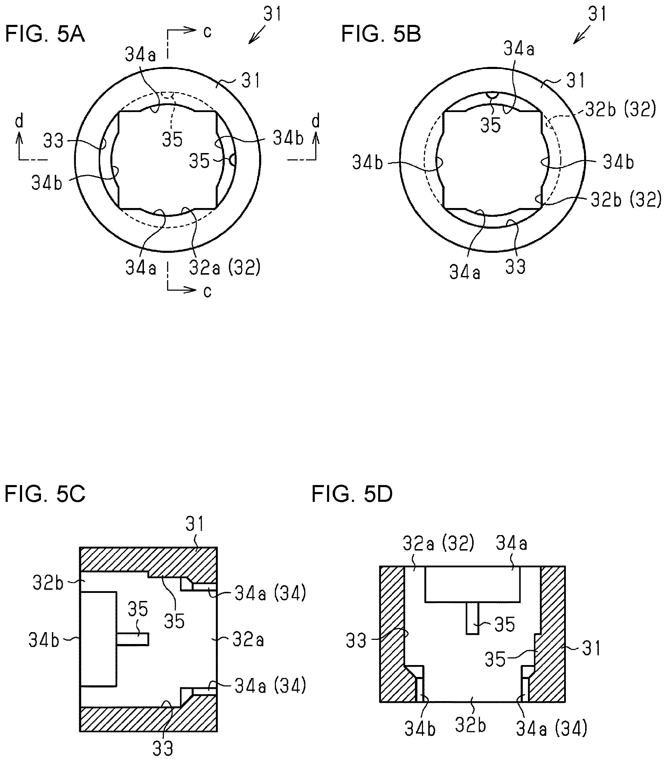

The connecting member 23 has a spherical trapezoidal shape, the whole of which is sandwiched between two parallel planes. The connecting member 23 has a resin core 31 and a metal cover 36 that covers the resin core 31. The resin core 31 is a molded body made of a synthetic resin material such as polyester, polypropylene, polyacetal, etc., and has a spherical trapezoidal shape. The resin core 31 has a through hole in the height direction, and the through hole comprises a first fitting recess 32a in the first plane facing the first connector 22a side as shown in Fig. 5A, and a second fitting recess 32b in the second plane facing the second connector 22b side, as shown in Fig. 5B. The first fitting recess 32a and the second fitting recess 32b are also collectively referred to as the fitting recess 32.

The metal cover 36 is a member that covers the spherical band, which is the side of the resin core 31. The metal cover 36 is closed so that the resin core 31 is placed inside in the unfolded state and adheres to the spherical band by means of caulking. Therefore, the first and second fitting recesses 32a and 32b are not covered and exposed by the metal cover 36.

The first fitting recess 32a and the second fitting recess 32b are formed in the shape of a bale in which the tip including the diameter-expanding portion 29 of the fitting protrusion 28 can be inserted. The first and second fitting recesses 32a and 32b are shaped so that the direction of the bale shape is rotated 90 degrees to each other with respect to the center of the cylinder.

As shown in Figs. 5c and 5d, inside the resin core 31, the through hole has a circular hole 33 configured with a diameter that allows the tip of the fitting protrusion 28 to rotate. Each opening edge in the short axis direction of the bale shape of the first fitting recess 32a has first hook portion 34a that prevent the first diameter-expanding portion 29a of the first fitting protrusion 28a from being released from the circular hole 33, and each opening edge in the short axis direction of the bale shape of the second fitting recess 32b has a second hook portion 34b that prevent the second diameter-expanding portion 29b of the second fitting protrusion 28b from being released from the circular hole 33. The first and second hook portions 34a and 34b are hereinafter collectively referred to as the hook portions 34. Projection 35 that engages the concave 30 is formed on the inner periphery of each circular hole 33. The concaves 30 and the projection 35 function as positioning means.

To connect the first fitting protrusion 28a of the first connector 22a to the first fitting recess 32a of the resin core 31, insert the first fitting protrusion 28a into the first fitting recess 32a and rotate the first fitting protrusion 28a 90 degrees in one direction relative to the resin core 31. Then, the concave 30 of the first fitting protrusion 28a engages the projection 35 in the circular hole 33 and is positioned. To connect the second fitting protrusion 28b of the second connector 22b to the second fitting recess 32b of the resin core 31, insert the second fitting protrusion 28b into the second fitting recess 32b and rotate the second fitting protrusion 28b 90 degrees in one direction relative to the resin core 31. Then, the concave 30 of the second fitting protrusion 28a engages the projection 35 in the circular hole 33 and is positioned. As a result, the first end 17 and the second end 18 are connected by the joint21. The state in which the first connector 22a and the second connector 22b are connected to the connecting member 23 will have approximately the same size and shape as the other balls 16a. And then, the endless ball chain 9 is configured.

Next, the operation of the horizontal blind provided with the ball chain 9 in the first embodiment configured as above will be described. In the ball chain 9 described above, the interval between balls 16a other than the joint 21 (with the first and second connectors 22a and 22b connected to the joint 23) and the interval between the joint 21 and the adjacent balls 16a are the same. Therefore, the ball chain 9 can rotate around the pulley 8 without restriction.

In the state where the first and second connectors 22a and 22b are connected to the connecting member 23, the diameter-expanding portion 29 of the first fitting protrusion 28a is engaged with the first hook portion 34a and is retained in the circular hole 33, and the diameter-expanding portion 29 of the second fitting protrusion 28b is engaged with the second hook portion 34b and is retained in the circular hole 33. In this hooking state, the connecting member 23 is positioned by the engagement of the projection 35 in the concave 30 of the diameter-expanding portion 29. The holding force at the time of this engagement is set to a holding force that prevent the fitting protrusion 28 from being disconnect from the fitting recess 32 by the normal pulling force applied to the ball chain 9 during normal slat lifting / lowering operations and slat angle adjustment operations. Only when a large pulling force exceeding the normal pulling force is applied to the ball chain 9, the fitting recess 32 is pushed open by the diameter-expanding portion 29 due to the elasticity of the synthetic resin of the hook portions 34a, 34b of the resin core 31, and the fitting protrusion 28 is removed from the fitting recess 32.

The first embodiment as described above can obtain the effects listed below:
(1-1) By connecting the connector 22 to the connecting member 23 at the joint 21, the fail-safe function of the metal ball chain 9 can be realized.
(1-2) The connector 22 is made of metal, and the connecting member 23 also has a metal appearance by covering the resin core 31 with a metal cover 36. Therefore, in the ball chain 9, the design of the joint 21 can be the same as that of the other parts.
(1-3) Since the ball chain 9 is configured so that the fitting protrusion 28 is inserted into the fitting recess 32 and rotated 90 degrees to engage the diameter-expanding portion 29 with the hook portions 34, the holding force to retain the fitting protrusion 28 in the connecting member 23 can be sufficiently secured while the operating force to fit the fitting protrusion 28 into the fitting recess 32 is minimized.
(1-4) After the joint 21 is unfitted, it can be easily repaired as an endless ball chain 9 by re-fitting the fitting protrusion 28 of the connector 22 into the fitting recess 32.
(1-5) Since the operating force to mate the fitting protrusion 28 into the fitting recess 32 is small, the fitting protrusion 28 can be re-fitted into the fitting recess 32 without the use of tools. Therefore, even if the joint 21 is disconnected, the user can easily restore it.
(1-6) The interval between balls 16a other than the joint 21 (with the first and second connectors 22a and 22b connected to the joint 23) and the interval between the joint 21 and the adjacent balls 16a are the same. Therefore, the ball chain 9 can rotate around the pulley 8 without restriction.
(1-7) The projection 35 are engaged in the concave 30 of the diameter-expanding portion 29, thereby positioning the fitting protrusion 28 in the state where the diameter-expanding portion 29 is engaged in the hook portions 34. This means that the fitting protrusion 28 can be prevented from accidentally rotating and removed from the fitting recess 32 during use.

The first embodiment as described above may be further implemented with appropriate modifications as follows:
- The projection(s) 35 may be provided on the diameter-expanding portion 29 and the recess(es) 30 may be provided on the inner surface of the circular hole 33.
- In the case that the diameter-expanding portion 29 is configured to be difficult to rotate due to friction with the inner surface of the circular hole 33, the configuration of the projection 35 and the concave 30 may be omitted because the diameter-expanding portion 29 is difficult to rotate and difficult to shift its position.
- The projection 35 on the inner periphery of the circular hole 33 can be two in total, on opposite sides of the hole. The position where the protrusion(s) 35 is(are) provided is not limited to the above example, but is determined relative to the position where the concaves 30 are provided.
- The connecting member 23 may not be composed of the resin core 31 and the metal cover 36, but may be composed of one metal member with the fitting recess 32, the hook portions 34, and the projection 35, provided by molding. The connecting member 23 may also be composed of only a resin member. In the case of a resin member, it may be painted or plated so that the surface has a metallic luster.

### [Second Embodiment]

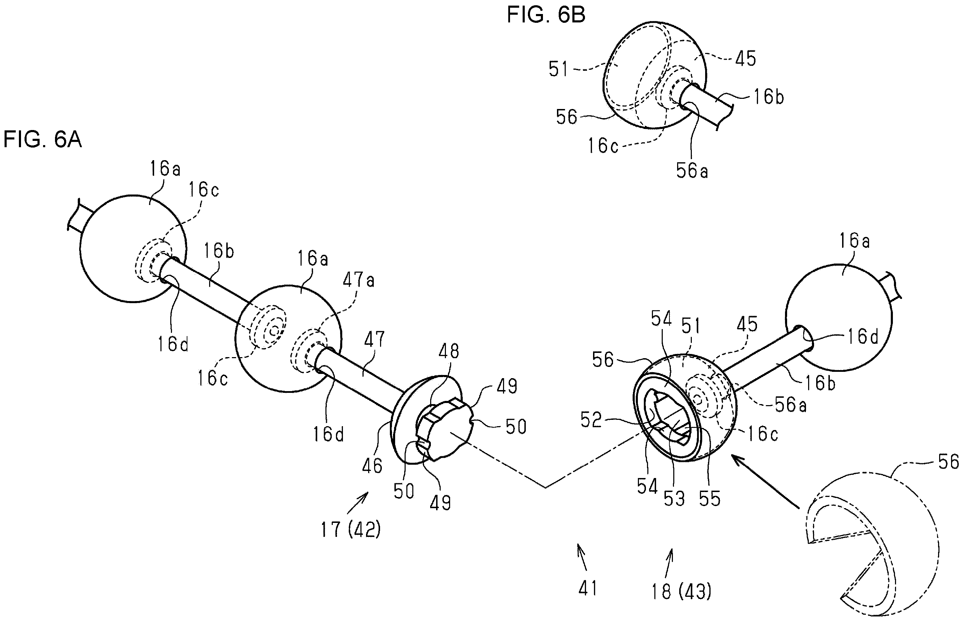

Figs. 6A and 6B show the joint 41 of the second embodiment. The joint 41 in the second embodiment has a first connector 42 constituting the first end 17 and a second connector 43 constituting the second end 18.

The first connector 42 is a metal molded body and has a missing sphere portion 46 having a shape of a sphere cut off in one plane, a link shaft portion 47 derived from the peak of the missing sphere portion 46, and a fitting protrusion 48 configured on the bottom surface opposite to the link shaft portion 47. The missing sphere portion 46, the link shaft portion 47, and the fitting protrusion 48 have the same configuration as the missing sphere portion 26, and the tip of the link shaft portion 47 is provided with a retaining portion 47a. The link shaft portion 47 fits into the through hole 16d of the adjacent ball 16a and engages with the ball 16a.

The fitting protrusion 48 is formed in the shape of a round shaft protruding from the flat bottom surface of the missing sphere portion 26. On the outer circumferential surface of the tip of the fitting protrusion 48, diameter-expanding portions 49 are formed diametrically in a linear symmetry to the center of the round shaft, and a concave 50 in a semicircular cross section is formed in the middle of each diameter-expanding portion 49.

The second connector 43 has a resin core 51 and a metal cover 56 that covers the resin core 51. The resin core 31 is a molded body made of a synthetic resin material such as polyester, polypropylene, polyacetal, etc., and has a spherical trapezoidal shape. The resin core 51 has a through hole that constitutes the fitting recess 52 in the height direction. The fitting recess 52 is formed in the portion of the through hole facing the first plane.

The metal cover 56 is a member that covers the spherical band constituting the side of the resin core 51 and the second plane side of the resin core 51, except for the first side of the resin core 51. The metal cover 56 is closed so that the resin core 31 is placed inside in the unfolded state and adheres to the spherical band by means of caulking. The second plane side of the second connector 43 constitutes a missing sphere space 45 with a missing sphere shape. Therefore, only the fitting recess 52 is not covered by the metal cover 56. The metal cover 56 comprises a through hole 56a at the top of the missing sphere space 45. The link shaft 16b is inserted into the through hole 56a, and the flange 16c is placed inside the ball 16a to prevent the link shaft 16b from being released from the ball 16a.

The fitting recess 52 is formed in the shape of a bale in which the tip including the diameter-expanding portion 49 of the fitting protrusion 48 can be inserted. Inside the resin core 51, a circular hole 53 with a diameter that allows the tip of the fitting protrusion 48 to rotate is configured at the back of the fitting recess 52. Each opening edge in the short axis direction of the bale shape of the fitting recess 52 has a hook portion 54 that prevent the diameter-expanding portion 49 of the fitting protrusion 48 from being released from the circular hole 53. Projection 55 that engages the concave 50 is formed on the inner periphery of each circular hole 53.

To connect the fitting protrusion 48 of the first connector 42 to the fitting recess 52 of the resin core 51, insert the fitting protrusion 48 into the fitting recess 52 and rotate the fitting protrusion 48 90 degrees in one direction relative to the resin core 51. Then, the concave 50 of the fitting protrusion 48 engages the concave 50 in the circular hole 53 and is positioned. As a result, the first end 17 and the second end 18 are connected by the joint 41. The state in which the first connector 42 and the second connector 43 are connected will have approximately the same size and shape as the other balls 16a. And then, the endless ball chain 9 is configured.

Next, the operation of the horizontal blind provided with the ball chain 9 in the second embodiment configured as above will be described. In the ball chain 9 described above, the interval between balls 16a in the ball chain 9 other than the joint 41 (with the first and second connectors 42 and 43 connected) and the interval between the joint 41 and the adjacent balls 16a are the same. Therefore, the ball chain 9 can rotate around the pulley 8 without restriction.

In the state where the first and second connectors 42 and 43 are connected, the diameter-expanding portion 49 of the fitting protrusion 48 is engaged with the hook portions 54 of the fitting recess 52 and is retained in the circular hole 53. In this hooking state, the first and second connectors 42 and 43 are positioned by the engagement of the projection 55 in the concave 30 of the diameter-expanding portions 49. The holding force at the time of this engagement is set to a holding force that prevent the fitting protrusion 48 from being disconnect from the fitting recess 52 by the normal pulling force applied to the ball chain 9 during normal slat lifting / lowering operations and slat angle adjustment operations. Only when a large pulling force exceeding the normal pulling force is applied to the ball chain 9, the fitting recess 52 is pushed open by the diameter-expanding portion 49 due to the elasticity of the synthetic resin of the hook portions 54 of the resin core 51, and the fitting protrusion 48 is removed from the fitting recess 52.

The second embodiment as described above can obtain the effects listed below in addition to the effects of the first embodiment:
(2-1) The joint 41 only needs to connect the first and second connectors 42 and 43, and compared with the first embodiment, the number of parts can be reduced in that the connecting member 23 is unnecessary.

The second embodiment as described above may be further implemented with appropriate modifications as follows:
The protrusion(s) 55 may be provided on the diameter-expanding portion 49, and the recess(es) 50 may be provided on the inner surface of the circular hole 53.

- In the case that the diameter-expanding portion 49 is configured to be difficult to rotate due to friction with the inner surface of the circular hole 53, the configuration of the projection 55 and the concave 50 may be omitted because the diameter-expanding portion 49 is difficult to rotate and difficult to shift its position.
- The projection 55 on the inner periphery of the circular hole 53 can be two in total, on opposite sides of the hole. The position where the protrusion(s) 55 is(are) provided is not limited to the above example, but is determined relative to the position where the concaves 50 are provided.
- The second connecter43 may not be composed of the resin core 51 and the metal cover 56, but may be composed of one metal member with the fitting recess 52, the hook portions 54, and the projection 55, provided by molding. The second connector 43 may also be composed of only a resin material 51. In the case of a resin material 51, it may be painted or plated so that the surface has a metallic luster.

### [Third Embodiment]

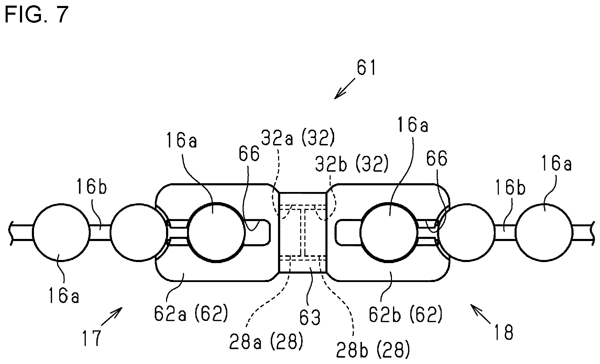

Fig. 7 shows the third embodiment of the connecting part 61. The connecting portion 61 has a first metal retainer 62a that holds the first end 17, a second metal retainer 62b that holds the second end 18, and a connecting member 63 that connects the first metal retainer 62a and the second metal retainer 62b. Since the first metal holding body 62a and the second metal holding body 62b have the same configuration, they are collectively referred to as the metal holding body 62 (also referred to simply as the holding body 62). The first metal retainer 62a and the second metal retainer 62b have the same configuration and are therefore collectively referred to as metal retainer 62 (simply referred to as retainer 62). The connecting member 63 is composed of a single metal ball part and is provided with a mating recess 32, a stopping part 34, and a projection 35 by molding.

The retainer 62 is a molded metal product and is provided with a retaining groove 66 that engages and retains the ball 16a that constitutes the ends 17, 18 of the ball chain 9 and the link shaft 16b that extends from the ball 16a. The end of the connecting side of the retaining body 62 is provided with a mating butt 28, which is the same as the mating butt 28 in the first embodiment. The mating protrusion of the first retainer 62a is referred to as the first mating protrusion 28a, and the mating protrusion of the second retainer 62b is also referred to as the second mating protrusion 28b. The mating protrusion 28 has a bulging diameter 29, and the bulging diameter 29 has a recessed portion 30 (see Figures 3 and 4).

The connecting member 63 comprises a first mating recess 32a in the first plane facing the first retainer 62a side and a second mating recess 32b in the second plane facing the second retainer 62b side. The first mating recess 32a and the second mating recess 32b are also collectively referred to as the mating recess 32 (see Figures 3 and 5). The mating recess 32 is provided with a mooring portion 34, a projection 35, and the like.

The first retainer 62a is fitted into the first mating recess 32a of the connecting member 63, and the second retainer 62b is fitted into the second mating recess 32b of the connecting member 63. As a result, the first end portion 17 and the second end portion 18 are connected by the connecting portion 61. As a result, an unterminated ball chain 9 is configured. The holding force of the connecting member 63 is set so that the mating protrusion 28 does not come off from the mating recess 32 by the normal pulling force acting on the ball chain 9 during normal slat raising and lowering operations and slat angle adjustment operations. Only when a large tensile force exceeding the normal tensile force is applied to the ball chain 9, the mating protrusion 28 can be removed from the mating recess 32.

The third embodiment as described above can achieve the effects enumerated as follows.
(3-1) A fail-safe function can be realized by connecting the first and second holding bodies 62a and 62b to the connecting member 63.

The third embodiment as described above may be further implemented with the following modifications as appropriate.
- The connecting member 63 may comprise a resin core material 31 and a metal cover 36 that covers the resin core material 31. The connecting member 63 may also be a resin molded product. In the case of a resin molded product, it may be painted or plated so that the surface has a metallic luster.

### [Forth Embodiment]

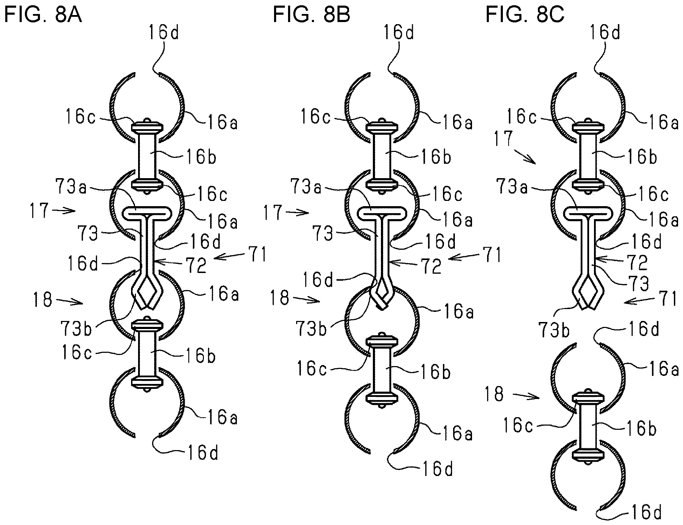

Figs. 8a through 8c show the linkage 71 of the fourth embodiment. The connecting portion 71 in the fourth embodiment has a link shaft member 72 disposed on a ball 16a comprising the first end portion 17. The link shaft member 72 is composed of a bent steel band, such as a plate spring, and is provided with a pair of elastic pieces 73. Each elastic strip 73 extends from a base end 73a and has an outwardly projecting engagement portion 73b at the tip of the elastic strip 73. The base end 73a is large enough to prevent it from exiting the through-hole 16d of the ball 16a and serves as a retaining part. The pair of elastic pieces 73 are inserted into the through-hole 16d of the ball 16a at the second end 18. When the pair of elastic pieces 73 are inserted into the through-hole 16d, they are temporarily flexed in a direction that brings them close to each other, and when the engagement part 73b enters the ball 16a, they return to their elastic state. As a result, the engaging portion 73b is engaged in the through-hole 16d.

The pair of elastic pieces 73 have enough elasticity that the engagement portion 73b does not come off from the through-hole 16d under a normal tensile force acting on the ball chain 9 during normal slat raising and lowering operations and slat angle adjustment operations. Only when a large tensile force exceeding the normal tensile force is applied to the ball chain 9, the engagement part 73b can be removed from the through-hole 16d.

The fourth embodiment as described above can achieve the effects enumerated as follows.
(4-1) The fail-safe function can be realized simply by diverting the existing ball 16a for the first end 17 and the second end 18, and using the link shaft member 72 as the link shaft.
(4-2) The link shaft member 72 can be realized by a simple configuration of bending a steel strip.

The fourth embodiment as described above may be further implemented with appropriate modifications as follows.

The number of elastic strips is not limited to two as long as there are multiple strips. The link shaft member 72 may be a resin molded part. In the case of a resin-molded part, it may be painted or plated so that the surface has a metallic luster.

### [Fifth Embodiment]

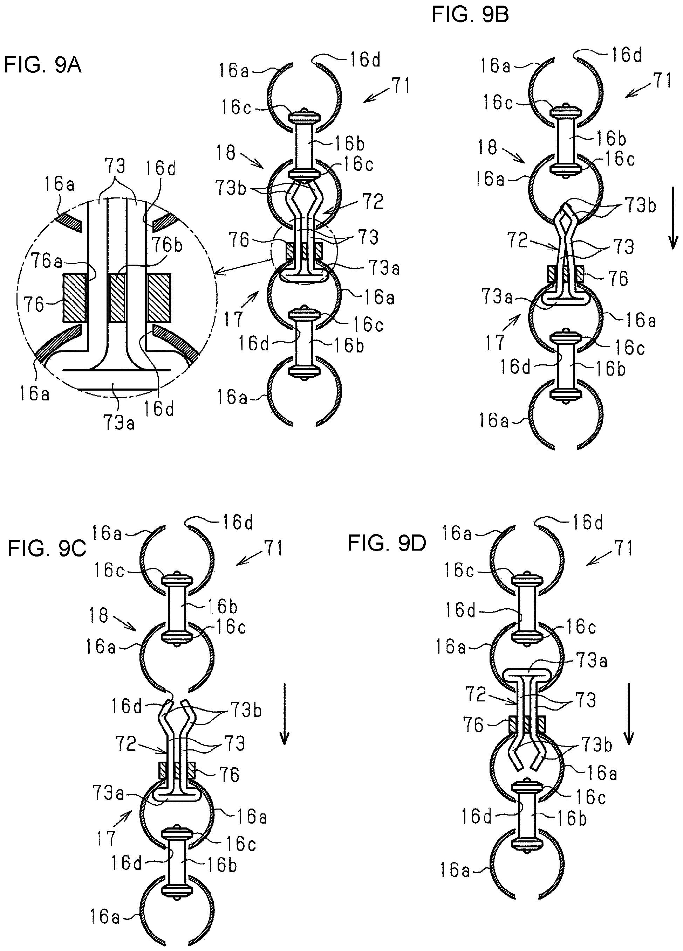

Figs. 9a through 9d show the connecting portion 71 of the fifth embodiment. The connection part 71 in the fifth embodiment has a displacement member 76 compared to the connection part 71 of the fourth embodiment. The displacement member 76 has an insertion part 76a configured with a hole through which each elastic piece 73 is inserted, and a gap maintenance part 76b configured between the insertion parts 76a. The gap maintaining portion 76b maintains the gap between adjacent elastic pieces 73. The displacement member 76 is displaced by its own weight between the base 73a and the engaging portion 73b along the elastic strip 73. The displacement member 76 may be composed of metal parts or plastic parts.

The displacement member 76 is displaced along the elastic strip 73 by its own weight to the side of the engagement part 73b or to the side of the base part 73a opposite to the engagement part 73b, depending on whether the engagement part 73b is facing upward or downward. When the displacing member 76 is displaced to the engaging part 73b side, the space between the displacing member 76 and the engaging part 73b becomes shorter, making it difficult for the elastic strip 73 to be displaced significantly. When the displacing member 76 is displaced to the side of the base 73a, the space between the displacing member 76 and the engaging part 73b becomes longer, and the elastic strip 73 is more easily displaced than in the short case. In other words, the link shaft member 72 is configured in such a way that the displacement member 76 is displaced depending on whether the engagement portion 73b faces upward or downward, and the ease of disengagement from the through-hole 16d changes.

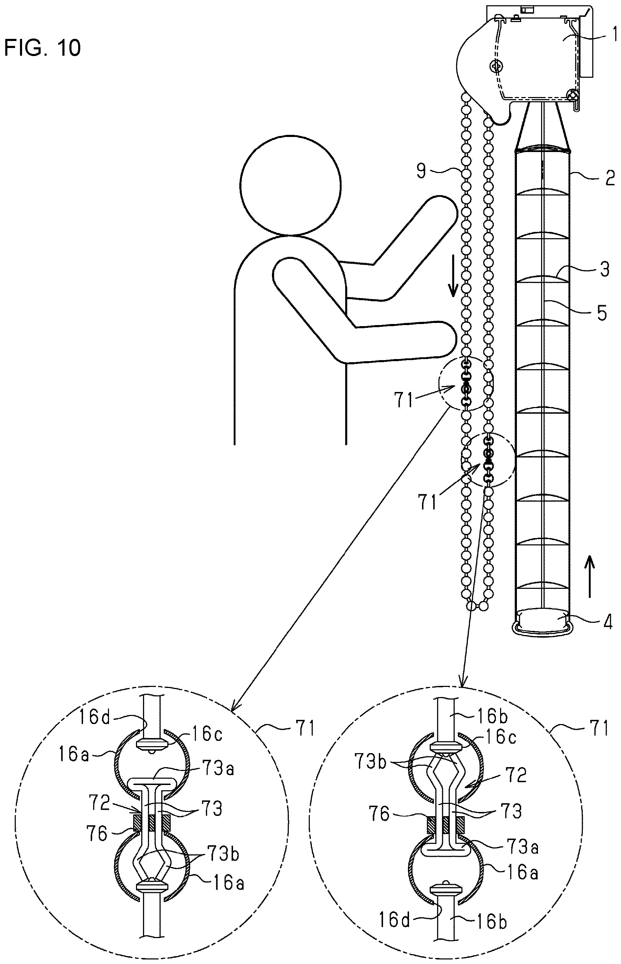

As shown in Fig. 10, the ball chain 9 is hung on the pulley 8, and the lifting cord 5 is wound on the take-up shaft 7 by pulling downward (in the direction of the arrow in the figure) the part that hangs down on the front side as seen by the operator. Therefore, when the bottom rail 4 at the lowest position is pulled up, the load to pull up the slats 3 and bottom rail 4 is continuously applied to the ball chain 9. On the other hand, when lowering the bottom rail 4, the ball chain 9 is unlocked and the bottom rail 4 descends naturally by temporarily pulling the part of the ball chain 9 on the far side as seen by the operator.

In other words, the front side of the ball chain 9 is often used to continuously pull downward as seen by the operator, while the back side is often used to temporarily pull downward as seen by the operator. The force to pull the back side as seen by the operator, i.e., to lower the bottom rail 4, is smaller than the force to pull the front side as seen by the operator, i.e., to pull up the slats 3 and bottom rail 4.

Therefore, in the annular ball chain 9, two linkage sections 71 are provided at 180 degrees apart. The link shaft member 72 located on the back side as seen by the operator is installed so that the engagement portion 73b faces upward (see Fig. 9a and Fig. 10). The link shaft member 72 located on the front side as seen by the operator is attached so that the engagement portion 73b faces downward (see Fig. 9D and Fig. 10). By attaching the link shaft member 72 in two places in this manner, the linkage 71 is always located at the back side and the front side as seen by the operator. The displacing member 76 is then displaced by its own weight to the base end 73a or the engagement part 73b side, which is located below.

Specifically, when the link shaft member 72 is located at the back side as seen by the operator, the displacement member 76 is displaced to the base end 73a side of the elastic piece 73, and the portion of the elastic piece 73 ahead of the displacement member 76 becomes longer, resulting in a larger displacement amount and easier displacement. This makes it easier to disengage the engagement portion 73b from the through-hole 16d. Even though the engaging part 73b is easily dislodged from the through-hole 16d, the engaging part 73b has a holding force that prevents it from being dislodged from the through-hole 16d even when a normal pulling force that temporarily pulls downward to lower the bottom rail 4 is applied.

On the other hand, when the link shaft member 72 is located on the front side as seen by the operator, the displacement member 76 is displaced to the engagement portion 73b side of the elastic piece 73, and the portion of the elastic piece 73 ahead of the displacement member 76 becomes shorter, resulting in a smaller displacement amount and less displacement. This makes it difficult for the engaging portion 73b to be dislodged from the through-hole 16d. The engaging portion 73b has a holding force that does not disengage from the through-hole 16d even when a normal pulling force that continuously pulls downward to pull up the slats 3 and bottom rail 4 is applied.

When the link shaft member 72 is located on the far side as seen by the operator or when the link shaft member 72 is located on the far side, the engagement portion 73b is more easily disengaged from the through hole 16d when the link shaft member 72 is located on the far side. When a large tensile force exceeding the normal tensile force is applied to the ball chain 9, the engagement portion 73b of the link shaft member 72 located at the back side as seen by the operator, where the engagement portion 73b is easily disengaged from the through hole 16d, is disengaged from the through hole 16d.

The fifth embodiment as described above can obtain the effects enumerated as follows.
(5-1) Two connecting portions 71 are provided at 180 degrees apart, and the ease of disengagement of the engagement portion 73b from the through-hole 16d can be changed depending on whether the link shaft member 72 is located on the front side or the rear side as seen by the operator. In this way, a fail-safe function can be realized while allowing the slats 3 and bottom rail 4 to be raised and lowered.

The fifth embodiment as described above can also be implemented with the following changes as appropriate.
- Contrary to the above example, the ball chain 9 is unlocked by temporarily pulling downward (in the direction of the arrow in the figure) the portion hanging down on the front side as seen by the operator, so that the bottom rail 4 descends naturally. Then, the slats 3 and bottom rail 4 may be pulled up by continuously pulling the part on the back side as seen by the operator. In this case, in the ball chain 9, the front side as seen by the operator is in the state shown in Fig. 9a, and the back side is in the state shown in Fig. 9d.

The slats 3 and bottom rail 4 may be pulled up when the portion hanging down on the front side as seen by the operator is continuously pulled downward, and when the slats 3 and bottom rail 4 are temporarily pulled downward, the lock may be released and the slats 3 and bottom rail 4 may be lowered. In this case, the connecting portion of the part hanging down in the front side as seen by the operator has the engagement portion 73b facing downward, and the displacement member 76 is displaced in the direction of the engagement portion 73b, making it difficult to be removed from the through-hole 16d. On the other hand, for the connection part on the back side as seen by the operator, the engaging part 73b faces upward and the displacement member 76 is displaced in the direction away from the engaging part 73b, making it easy to be removed from the through-hole 16d. For example, the connecting portion on the back side as seen by the operator is disengaged when a pulling force that is different from the pulling force that disengages the connecting portion on the front side and that is greater than the pulling force, such as when an object is caught in the ball chain 9, is applied.

Contrary to this, the slats 3 and bottom rail 4 may be raised when the portion hanging down on the front side as seen by the operator is temporarily pulled downward, and the slats 3 and bottom rail 4 may be lowered when pulled downward continuously. In this variant, the raising and lowering operations of the slats 3 and bottom rail 4 are performed at the portions hanging down in the front side as seen by the operator, but conversely, the raising and lowering operations of the slats 3 and bottom rail 4 may be performed at the portions hanging down in the back side as seen by the operator.

When the ball chain is pulled, it is not only pulled directly downward, but also diagonally downward.

The ball chain 9 may be attached to the front of the head box and hung in the width direction (left and right) via the pulley 8, instead of being hung in the front-back direction via the pulley 8. The pulley 8 in this case is installed so that the rotation axis is in the front-back direction of the head box.

### [Sixth Embodiment]

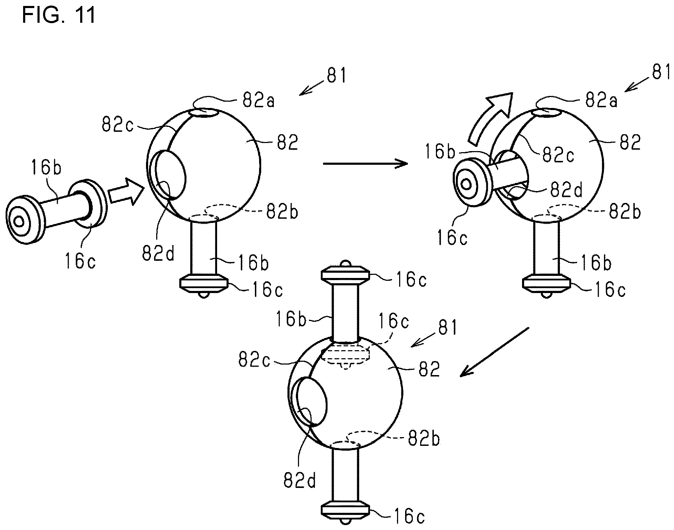

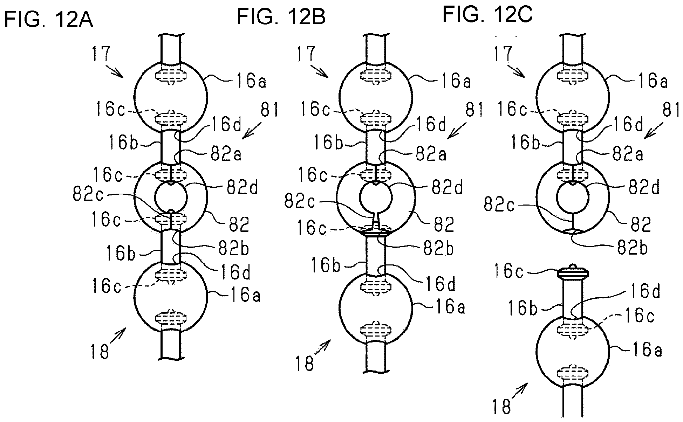

Fig. 11 and Figs. 12a through 12c show the connection 81 of the sixth embodiment. The linkage 81 in the sixth embodiment connects the linkage shaft 16b (first metal linkage shaft) extending from the ball 16a (first metal ball) comprising the first end 17 and the linkage shaft 16b (second metal linkage shaft) extending from the ball 16a (second metal ball) comprising the second end 18 with the metal linkage ball 82 is provided. The metal link ball 82 has a first through hole 82a through which the first flange portion 16c of the link shaft 16b of the first end 17 is engaged, and a second through hole 82b through which the second flange portion 16c of the link shaft 16b of the second end 18 is engaged. The first through-hole 82a and the second through-hole 82b are provided in opposing positions, and the first through-hole 82a and the second through-hole 82b are connected by a split line 82c. In addition, a third through-hole 82d is provided in the middle of the first through-hole 82a and the second through-hole 82b and on the split line 82c. The metal link ball 82 is composed of a steel strip, such as a plate spring, which is formed and closed at the split line 82c by clamping. The split line 82c is configured to return to the closed state even when the link shaft 16b opens to the extent that it exits the through holes 82a, 82b, 82d.

As shown in Fig. 12a, the metal link ball 82 does not allow the first flange portion 16c of the link shaft 16b to come off the first through-hole 82a or the second flange portion 16c to come off the second through-hole 82b under the normal tensile force acting on the ball chain 9 during normal slat raising and lowering operations and slat angle adjustment operations. There is no such thing. Only when a large tensile force exceeding the normal tensile force is applied to the ball chain 9, the metal link ball 82 will temporarily open at the split line 82c (see Fig. 12b). This will cause the first flange portion 16c to disengage from the first through-hole 82a (see Figure 12c). In some cases, the second flange portion 16c may disengage from the second through-hole 82b. The metal link ball 82 will return to the state where the split line 82c is closed after the flange portion is dislodged.

To reattach the dislodged link shaft 16b to the metal link ball 82, the dislodged link shaft 16b is moved from the third through-hole 82d to the first through-hole 82a or the second through-hole 82b by temporarily opening the split line 82c and inserting the flange 16c.

The sixth embodiment as described above can achieve the effects enumerated as follows.
(6-1) A fail-safe function can be realized by the metal link ball 82.
(6-2) The link shaft 16b can be diverted, and the metal link ball 82 can be configured by adding a third through-hole 82d in addition to the first through-hole 82a, second through-hole 82b, and split line 82c.

### [Seventh Embodiment]

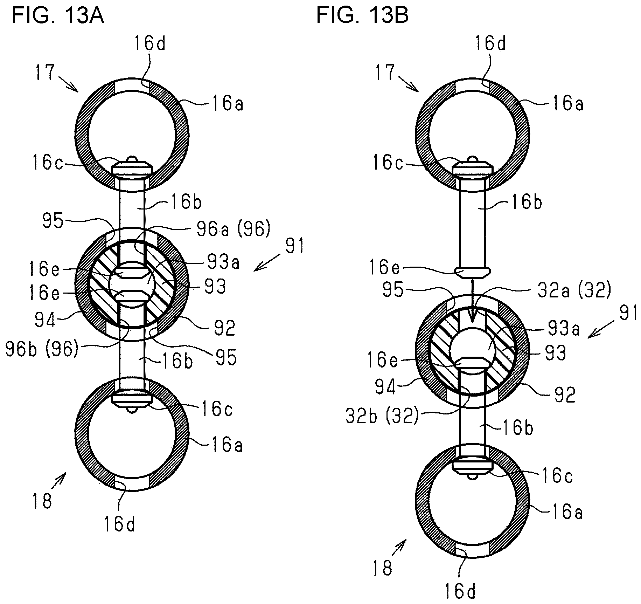

Fig. 13a - Fig. 13b show the linkage 91 of the seventh embodiment. The linkage 91 in the seventh embodiment is provided with a link ball 92. The link ball 92 is provided with a resin core material 93 and a metal cover 94 covering the resin core material 93.

The resin core material 93 has a space 93a inside. The resin core material 93 has a first insertion hole 96a on the first end 17 side and a second insertion hole 96b on the second end 18 side, connecting the space 93a with the outside. The first insertion hole 96a and the second insertion hole 96b are hereinafter collectively referred to as the insertion hole 96. The insertion hole 96 has a diameter into which the flange portion 16e can be press-fitted. The end flange portion 16e of the link shaft 16b is press-fitted into the space 93a through the insertion hole 96. The flange portion 16e that is press-fitted into the insertion hole 96 has a smaller diameter than the flange portion 16c that is fitted into the through-hole 16d of the ball 16a. The flange portion 16e that is fitted to the through-hole 96 is press-fitted against the through-hole 96.

The metal cover 94 is equipped with a through hole 95. The through hole 95 is large enough to allow the flange 16e to be inserted. The metal cover 94 is closed tightly to the resin core material 93 by means of a wrench.

The link ball 92 does not allow the flange portion 16c to come out of the space portion 93a because the flange portion 16c is engaged around the insertion hole 96 under the normal tensile force acting on the ball chain 9 during normal slat raising and lowering operations and slat angle adjustment operations. However, when a large tensile force exceeding the normal tensile force acts on the ball chain 9, the elasticity of the resin core material 93 causes the flange portion 16e to come off from the insertion hole 96.

The seventh embodiment described above can achieve the effects enumerated as follows.
(7-1) A fail-safe function can be realized with the link ball 92.
(7-2) The link shaft 16b can be diverted and the link ball 92 can be composed of a resin core material 93 and a metal cover 94.

### [Eighth Embodiment]

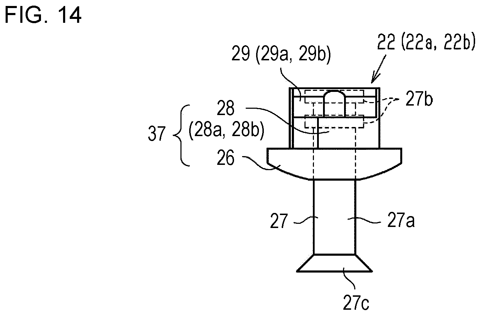

Figure 14 shows a connector 22 of the eighth embodiment. As shown in Fig. 14, the connector 22 has a resin-fitted portion 37 as a mating portion and a link shaft 27 as a link shaft portion. The link shaft 27 has a straight-shaped metal shaft part 27c, an integration part 27b provided by one end of the metal shaft part 27c, and a retaining part 27a provided by the other end of the metal shaft part 27c. The integrated part 27b is a convex part that integrates with the resin fitting part 37 that is mated with the connecting member 23, i.e., it functions as a retaining part. The integrated part 27b is an enlarged part that extends in the outer circumferential direction with respect to the metal shaft part 27c and has a flange shape that is continuous in the circumferential direction. At one end of the metal shaft portion 27c, a plurality of diameter expansion portions are provided in parallel and spaced apart in the axial direction. The number of the enlarged portions is not particularly limited, and may be three or more, or even just one. If the number of the enlarged portions is large, it will be difficult to pull out from the resin fitting portion 37, and if the number of the enlarged portions is small, the shape of the link shaft 27 can be simplified and it will be easy to manufacture. The enlarged portions may have notches in the radial direction and be discontinuous in the circumferential direction.

The retaining part 27a is a convex part for retaining the metal ball 16a and is a metal expanding part. The retaining portion 27a is positioned inside the metal ball 16a with the metal shaft 27c inserted into the through hole 16d. The retaining portion 27a has an inclined or spherical surface on the metal shaft portion 27c side that corresponds to the inner surface of the metal ball 16a. The shape of the surface on the other side of the retaining portion 27a is not particularly limited, but here it is composed of a flat surface.

The eighth embodiment as described above can achieve the effects enumerated as follows.
(1) The link shaft 27 and the resin fitting portion 37 can be easily integrated by insert molding.
(2) The link shaft 27 is provided with an integration part 27b, and the resin goes around the integration part 27b, making it difficult for the link shaft 27 to come loose from the resin fitting part 37.
(3) The integrated part 27b is provided with an enlarged diameter part having a continuous flange shape in the circumferential direction, so it can be more firmly integrated with the resin fitting part 27.
(4) The retaining portion 26c can connect the metal ball 16a to the connector 22 more strongly than the connection of the connector 22 to the connecting member 23.

The first through eighth embodiments described above may be further implemented with appropriate modifications as follows:
- The ball chain 9 can be used not only for horizontal blinds but also for roll screens, vertical blinds, and the like. The ball chain 9 is used as an operating cord to open and close these slats, screens, and other shade material.

### Reference Signs List

1: head box, 2: ladder tape, 3: slat, 4: bottom rail, 5: lifting cord, 6: support member, 7: winding shaft, 8: pulley, 9: ball chain, 10: gear box, 11: tilt unit, 12a: lifting shaft, 12b: tilt shaft, 13: tilt drum, 16a: ball, 16b: link shaft, 16c: flange, 16d: through hole, 16e: flange, 17: first end, 18: second end, 21: joint, 22: connector, 22a: first metal connector, 22b: second metal connector, 23: connecting member, 26: missing sphere portion, 27: link shaft portion (link shaft), 27a: retaining portion, 27b: integrated part, 27c: metal shaft part, 28: 28c: metal shaft part, 28: fitting protrusion, 28a: first fitting protrusion, 28b: second fitting protrusion, 29: diameter-expanding portion 29a: first diameter-expanding portion, 29b: second diameter-expanding portion, 30: concave, 31: resin core, 32: fitting recess, 32a: first fitting recess, 32b: second fitting recess, 33: circular hole, 34: hook portion, 34a: first hook portion, 34b: second hook portion, 35: projection, 36: metal cover, 41: joint, 42: first connector, 43: second connector, 45: missing sphere space, 46: missing sphere portion, 47: link shaft portion, 47a: retaining portion, 48: fitting protrusion, 49: diameter-expanding portion, 50: concave, 51: resin core, 52: fitting recess, 53: circular hole, 54: hook portions, 55: projection, 56: metal cover, 56a: through hole, 61, Connecting part, 62, Retaining body, 62a, First metal retainer, 62b, Second metal retainer, 63, Connecting member, 66, Retaining groove, 71 , Connection part, 72, Link shaft member, 73, Elastic piece, 73a, Base end, 73b, Engagement part, 76, Displacement member, 76a , insertion part, 76b, gap maintenance part, 81, connection part, 82, metal link ball, 82a, first through hole, 82b, second through hole, 82c. , Split wire, 82d, Third through-hole, 91, Connecting part, 92, Link ball, 93, Resin core material, 93a, Space, 94 , metal cover, 95, through hole, 96a, first insertion hole, 96b, second insertion hole

## Claims

1. A ball chain in which a plurality of metal balls are connected by metal link shafts and the first and second end thereof are connected at a joint, wherein:
the joint is disconnected at least at the first end or at the second end when a pulling force exceeding the pulling force of normal operation is applied to the ball chain.

2. The ball chain according to claim 1, wherein:
the joint comprises
a first metal connector constituting the first end and having a first fitting protrusion,
a second metal connector constituting the second end and having a second fitting protrusion, and
a connecting member connecting the first and second metal connector and having a resin core and a metal cover covering the resin core;
the resin core has a first fitting recess into which the first fitting protrusion is fitted and a second fitting recess into which the second fitting protrusion is fitted; and
due to the elasticity of the resin core, at least the first fitting protrusion to be disconnected from the first fitting recess or the second fitting protrusion to be disconnected from the second fitting recess when a pulling force exceeding the pulling force of normal operation is applied to the ball chain.

3. The ball chain according to claim 2, wherein:
the first fitting protrusion is provided with a first diameter-expanding portion;
the second fitting protrusion is provided with a second diameter-expanding portion;
the first fitting recess is provided with a first hook portion to which the first diameter-expanding portion is hooked; and
the second fitting recess is provided with a second hook portion to which the second diameter-expanding portion is hooked.

4. The ball chain according to claim 1, wherein:
the joint comprises
a first connector made of metal, constituting the first end and having a fitting protrusion, and
a second connector constituting the second end and is connected to the first connector;
the second connector has a resin core and a metal cover that covers the resin core;
the resin core has a fitting recess into which the fitting protrusion is fitted; and
due to the elasticity of the resin core, the fitting protrusion to be disconnected from the fitting recess when a pulling force exceeding the pulling force of normal operation is applied to the ball chain.

5. The ball chain according to claim 1, wherein:
the joint comprises
a first metal holder holding the first end and having a first fitting protrusion,
a second metal holder holding the second end and having a second fitting protrusion, and
a connecting member connecting the first and second metal holder;
the connecting member has a first fitting recess into which the first fitting protrusion is fitted and a second fitting recess into which the second fitting protrusion is fitted; and
at least the first fitting protrusion is disconnected from the first fitting recess, or the second fitting protrusion is disconnected from the second fitting recess when a pulling force exceeding the pulling force of normal operation is applied to the ball chain.

6. The ball chain according to claim 1, wherein:
the joint comprises a link shaft member having an elastic piece, wherein:
the elastic piece is placed in the metal ball constituting the first end and provided with an engagement portion at the tip;
the engagement portion is inserted into a through hole of the metal ball constituting the second end; and
due to the elasticity of the elastic piece, the engagement portion is removed from the through hole when a pulling force exceeding the pulling force of normal operation is applied to the ball chain.

7. The ball chain according to claim 6, wherein:
the joint further comprises a displacement member inserted with the pair of elastic pieces and displaced by its own weight; and
the displacement member is configured to reduce the amount of displacement of the elastic pieces in the direction in which the engagement portions are removed from the through hole when displaced in the direction approaching the engagement portions and configured to increase the amount of displacement of the elastic pieces in the direction in which the engagement portions are removed from the through hole when displaced in the direction away from the engagement portions.

8. The ball chain according to claim 1, wherein:
the joint comprises a metal link ball to which a first metal link shaft extending from the first end and a second metal link shaft extending from the second end are hooked;
the first metal link shaft has a first flange at the end and the second metal link shaft has a second flange at the end;
the metal link ball has a first through hole to which the first flange is engaged, a second through hole to which the second flange is engaged, a split line that opens the metal link ball, and a third through hole located between the first through hole and the second through hole and on the split line; and
the metal link ball temporarily opens from the split line, allowing at least the first flange to be removed from the first through hole or the second flange to be removed from the second through hole when a pulling force exceeding the pulling force of normal operation is applied to the ball chain.

9. The ball chain according to claim 1, wherein:
the joint comprises a metal link ball to which a first metal link shaft extending from the first end and a second metal link shaft extending from the second end are hooked;
the metal link ball has a resin core and a metal cover that covers the resin core;
the resin core has a space inside that is connected to the insertion hole where the flange of the first metal link shaft and the insertion hole where the flange of the second metal link shaft can be press-fitted;
the metal cover has a through hole connecting the insertion hole to the outside and through which the flange can be inserted; and
the flange is removed from the space when a pulling force exceeding the pulling force of normal operation is applied to the ball chain.

10. A shade device in which an endless ball chain is hung on a pully and a shade material is opened and closed by operation of the ball chain, wherein:
the ball chain is configured such that a plurality of metal balls are connected by metal link shafts and that the first and second ends thereof are connected at joints;
one joint is located at one side of the ball chain with respect to the pulley and other joint is located at the other side of the ball chain with respect to the pulley; and
the joints have a different ease of disconnection from the ends when they are located at the one side than when they are located at the other side.

11. The shade device according to claim 10, wherein:
the joint located at the one side disconnects when a pulling force exceeding the pulling force of normal operation of opening the shade material is applied; and
the joint located at the other side disconnects when a pulling force exceeding the pulling force of normal operation of closing the shade material is applied.

12. The shade device according to claim 10, wherein:
at the one side, the shade material is in one of the operating states of closing and opening when continuously operated, and at the other side, the shade material is in the other of the operating states of closing and opening when temporarily operated;
the joint at the one side disconnects when a pulling force exceeding the pulling force of normal operation at the one side is operated; and
the joint at the other side disconnects when a pulling force lower than the pulling force of the normal operation is operated.

13. The shade device according to any one of claims 10 to 12, wherein:
the joints comprise a link shaft member having a pair of elastic pieces, and a displacement member;
the pair of elastic pieces are placed in the metal ball constituting the first end and provided with an engagement portion at the tip;
the engagement portions are inserted into a through hole of the metal ball constituting the second end;
the displacement member is inserted with the pair of elastic pieces and displaced by its own weight; and
the displacement member is configured to displace in the direction away from the engagement portions and increase the amount of displacement of the elastic pieces in the direction in which the engagement portions are removed from the through hole when the joints are placed at the one side, and configured to displace in the direction approaching the engagement portions and reduce the amount of displacement of the elastic pieces in the direction in which the engagement portions are removed from the through hole when the joints are placed at the other side.
